# EUROPEAN PATENT APPLICATION

(11) **EP 4 647 299 A1**
(43) Date of publication of application: **12.11.2025**
(21) Application number: 24747485.1
(22) Date of filing: 26.01.2024
(51) Int. Cl.: B60P 3/36, B60R 15/04

(54) **MOBILE-HOME-TYPE TRAILER**

(30) Priority: 26.01.2023 KR 20230010339
(71) Applicant: LG Electronics Inc., Yeongdeungpo-gu Seoul 07336 (KR)
(72) Inventor: LEE, Jungsuk, Seoul 08592 (KR); KIM, Daewoong, Seoul 08592 (KR); OH, Min Kyu, Seoul 08592 (KR); HWANG, Sung Gul, Seoul 08592 (KR); LEE, Won Jin, Seoul 08592 (KR); KIM, Taihong, Seoul 08592 (KR); CHOI, Jeong Guen, Seoul 08592 (KR); KIM, Hyun Chul, Seoul 08592 (KR); JO, Yu Na, Seoul 08592 (KR); LIM, Jae Myung, Seoul 08592 (KR)
(74) Representative: Vossius & Partner Patentanwälte Rechtsanwälte mbB
(86) International application number: PCT/KR2024/001286
(87) International publication number: WO 2024/158252

(57) **Abstract**

The present invention relates to a mobile-home-type trailer. An air conditioner according to an embodiment of the present invention can be provided in a machine room formed below a second residential space, so as not to be exposed to the outside of a trailer body. Therefore, the air conditioner is not exposed to the outside so that the risk of breakdown or damage caused by external foreign material and the like during movement or use can be minimized.

## Description

### Technical Field

The present disclosure generally relates to a mobile-home-type trailer and, more particularly, to a mobile-home-type trailer that can be towed and moved by a vehicle.

### Background Art

Recently, a mobile home-type trailer has become widely popular, which allows a user to stay in a desired location without being restricted by a place by installing a box-shaped trailer including living utensils such as a bed and kitchen inside and towing the trailer with a vehicle.

This type of mobile-home-type trailer is known by various names such as a caravan, a camping trailer, etc.

Since the mobile-home-type trailer is intended for a user to engage in everyday activities such as sleeping and cooking, the trailer is equipped with home appliances, a bathroom, a sink, and a bedroom for sleeping as is provided in a typical home.

In particular, an air conditioner for heating and cooling may be essentially installed in the mobile-home-type trailer to heat or cool the interior depending on the outside temperature.

Typically, an air conditioner is an apparatus that has a refrigeration cycle device, including a compressor, an outdoor heat exchanger, a capillary tube, and an indoor heat exchanger, installed inside so as to appropriately discharge cold air formed in an evaporator and warm air generated in a condenser according to the indoor conditions, thereby maintaining a comfortable indoor atmosphere.

An air conditioner is divided into an integrated air conditioner in which a refrigeration cycle device is installed in one body, usually mounted on a window frame, and an indoor part faces inward and an outdoor part faces outward, relative to the window frame, and a split-type air conditioner in which indoor and outdoor units are separated and installed indoors and outdoors respectively. Here, the outdoor unit of the split-type air conditioner usually includes a compressor that generates a lot of noise, so the outdoor unit is installed outdoors if possible.

Even in the case of a conventional mobile-home-type trailer, when applying an air conditioner, an outdoor unit is installed outside. For example, "OUTDOOR UNIT SUPPORTER INSTALLED ON REAR DOOR FOR CAMPING CAR," disclosed in Korean patent No. 10-2391763 proposes an outdoor unit supporter that minimizes external impact and air resistance caused by wind during driving by installing an outdoor unit on a rear door side of a camping car.

However, when installing an outdoor unit outside the mobile-home-type trailer, there is a problem of damaging the beauty of the overall appearance of the mobile-home-type trailer.

In addition, even if the outdoor unit is firmly fixed to the outdoor unit supporter disclosed in the Korean Patent described above, vibrations generated during driving of a vehicle may have a negative effect on the fixation of the outdoor unit. In addition, there is a risk that the inside of the outdoor unit may be contaminated and malfunctioned due to foreign substances flying from the surroundings during the driving of a vehicle, and there is also a risk of damage due to impact.

### Disclosure

### Technical Problem

An objective of the present disclosure is to provide a mobile-home-type trailer in which an air conditioner is not exposed to the outside.

Another objective of the present disclosure is to provide a mobile-home-type trailer which, even when manufactured in a relatively small size, prevents the air conditioner from being exposed to the outside and allows the air conditioner to be separated from a living space.

Another objective of the present disclosure is to provide a mobile-home-type trailer that provides heating, cooling, and ventilation functions while employing a structure that minimizes the size of the air conditioner.

Another objective of the present disclosure is to provide a mobile-home-type trailer that can increase space efficiency without the duct structure of the air conditioner being exposed to a residential space inside the mobile-home-type trailer.

### Technical Solution

A mobile-home-type trailer according to the embodiment of the present disclosure may include a trailer body. In one embodiment, an interior of the trailer body may be partitioned into a first residential space and a second residential space.

The mobile-home-type trailer according to the embodiment of the present disclosure may include a machine room. The machine room may be formed below the second residential space so as not to be exposed to the outside of the trailer body, and may be formed to be partitioned from the second residential space.

The mobile-home-type trailer according to the embodiment of the present disclosure may include an air conditioner. In an embodiment, the air conditioner may be installed inside the machine room so as not to be exposed to the outside of the trailer body.

In an embodiment, the second residential space may be formed on a front side of the mobile-home-type trailer in a towing direction thereof. Additionally, the first residential space may be formed on a rear side in the towing direction. Here, the machine room may be formed below the second residential space to be offset toward the front side in the towing direction.

The air conditioner according to the embodiment of the present disclosure may include an indoor heat exchanger and an outdoor heat exchanger. In an embodiment, the machine room may be divided into an indoor-air space in which the indoor heat exchanger is installed, and an outdoor-air space in which the outdoor heat exchanger is installed.

In an embodiment, the indoor-air space may be divided into an indoor-air discharge space and an indoor-air intake space relative to the indoor heat exchanger.

The mobile-home-type trailer according to the embodiment of the present disclosure may include an indoor-air discharge duct and an indoor-air intake duct.

In an embodiment, the indoor-air discharge duct may be installed in the trailer body so that a first side of the indoor-air discharge duct communicates with the first residential space and a second side thereof communicates with the indoor-air discharge space. Here, the indoor-air discharge duct may allow air that has exchanged heat with the indoor heat exchanger to flow from the indoor-air discharge space to the first residential space.

In an embodiment, the indoor-air intake duct may be installed in the trailer body so that a first side of the indoor-air intake duct communicates with the first residential space and a second side thereof communicates with the indoor-air intake space. Here, the indoor-air intake duct may allow the air from the first residential space to flow to the indoor-air intake space.

The machine room according to the embodiment of the present disclosure may include an outdoor-air inlet and an outdoor-air outlet that allow communication between the outside of the trailer body and the outdoor-air space. Here, the air conditioner may be configured to include an outdoor-air blower fan that causes external air to be drawn in through the outdoor-air inlet, pass through the outdoor heat exchanger, and be discharged to the outside through the outdoor-air outlet.

The air conditioner according to the embodiment of the present disclosure may include a heat exchange unit. Here, the heat exchange unit may include independent air flow paths formed in a first direction and a second direction intersecting the first direction, respectively.

In an embodiment, the heat exchange unit may include an indoor-air introduction part, an indoor-air discharge part, an outdoor-air introduction part, and an outdoor-air discharge part.

Here, the indoor-air introduction part may face the indoor-air space in the first direction, and the indoor-air discharge part may face the outdoor-air space in the first direction. In addition, the outdoor-air introduction part may face the outdoor-air space in the second direction, and the outdoor-air discharge part may face the indoor-air space in the second direction.

In an embodiment, the air conditioner may be operable in a normal operation mode in which an air flow through the heat exchange unit is blocked, and in a ventilation operation mode in which air flows through the heat exchange unit.

The air conditioner according to the embodiment of the present disclosure may include a first damper and a second damper.

In an embodiment, the first damper may selectively communicate the outdoor-air inlet with one of the outdoor-air space and the outdoor-air introduction part of the heat exchange unit. In addition, the second damper may selectively communicate the indoor-air intake duct with one of the indoor-air intake space and the indoor-air introduction part of the heat exchange unit.

Here, in the normal operation mode, the first damper may communicate the outdoor-air inlet with the outdoor-air space, and the second damper may communicate the indoor-air intake duct with the indoor-air intake space.

In addition, in the ventilation operation mode, the first damper may communicate the outdoor-air inlet with the outdoor-air introduction part of the heat exchange unit, and the second damper may communicate the indoor-air intake duct with the indoor-air introduction part of the heat exchange unit.

In an embodiment, in the ventilation operation mode, air introduced from the outside through the outdoor-air inlet may flow through the outdoor-air introduction part and the outdoor-air discharge part of the heat exchange unit to the indoor-air intake space, and then flow through the indoor heat exchanger to the indoor-air discharge duct.

In addition, in the ventilation operation mode, air drawn in from the first residential space through the indoor-air intake duct may flow through the indoor-air introduction part and the indoor-air discharge part of the heat exchange unit to the outdoor-air space, and be discharged to the outside through the outdoor-air outlet.

The machine room according to the embodiment of the present disclosure may have the outdoor-air space and the indoor-air space partitioned from each other, and may include a partition wall that supports the heat exchange unit such that the indoor-air discharge part and the outdoor-air introduction part of the heat exchange unit face the outdoor-air space, and the indoor-air introduction part and the outdoor-air discharge part of the heat exchange unit face the indoor-air space.

The trailer body according to the embodiment of the present disclosure may include a floor structure, a ceiling structure, a pair of side structures, a front structure, and a partition-wall structure.

In an embodiment, the floor structure may form floors of the first residential space and the second residential space. The pair of side structures may form wall surfaces on opposite sides in a side direction that intersects the towing direction. The front structure may form a front wall surface in the towing direction. The partition-wall structure may connect the floor structure with the ceiling structure so as to partition the first residential space and the second residential space from each other.

In an embodiment, the indoor-air intake duct and the indoor-air discharge duct may extend from the indoor-air space of the machine room through the front structure along the ceiling structure on the upper side of the second residential space and communicate with the first residential space. Here, the indoor-air intake duct and the indoor-air discharge duct may be embedded within the front structure and the ceiling structure.

In an embodiment, the indoor-air discharge duct may be configured to include a branched discharge duct that branches from the ceiling structure on the upper side of the second residential space to communicate with the second residential space.

In an embodiment, an entrance for access from the outside may be formed on one side of the pair of side structures. Here, the entrance may be connected to the second residential space.

In an embodiment, the outdoor-air inlet may be formed to face toward the lower side of the trailer body. In addition, the outdoor-air outlet may be formed to face forward in the towing direction of the trailer body.

In an embodiment, the second residential space may be divided into a kitchen space and a bathroom space, and the machine room may be formed below the bathroom space.

According to the embodiment of the present disclosure, the trailer body may include a rear structure that has a rear wall surface in the towing direction of the trailer body. In an embodiment, the rear structure may include a rear opening door that is coupled to the rear end of the ceiling structure to be rotatable in an up-down direction, thereby opening and closing the rear of the trailer body.

In an embodiment, the first residential space may include at least one of a bedroom space and a living room space. In addition, the second residential space may include at least one of the bathroom space, the kitchen space, and an entry space in which the entrance is formed.

### Advantageous Effects

The mobile-home-type trailer according to the present disclosure may have one or more of the following effects.

First, the air conditioner may be installed inside the machine room without being exposed to the outside, thereby minimizing the risk of malfunction or damage caused by external foreign substances during movement or use.

Second, the air conditioner may be arranged inside the machine room, thereby preventing the exterior design of the trailer body from being affected.

Third, even when the air conditioner is installed inside the trailer body, the air conditioner may be separated from the living spaces such as the first residential space, for example, the bedroom space or the living room space, and the second residential space such as the bathroom space or the kitchen space, thereby minimizing impacts such as noise caused by the operation of the air conditioner.

Fourth, by forming the machine room, in which the air conditioner is installed, below the second residential space, such as the bathroom space, even if the mobile-home-type trailer is manufactured relatively small, the air conditioner may be separated from the living space without being exposed to the outside, thereby increasing the space efficiency of the small mobile-home-type trailer.

Fifth, the indoor-air intake duct and the indoor-air discharge duct for air circulation of the air conditioning equipment may be embedded inside the structure constituting the trailer body, thereby minimizing impacts on the utilization of indoor space and design.

Sixth, the machine room in which the air conditioner is installed may be arranged to be offset toward the front in the towing direction, and the second residential space, such as the bathroom space, may also be arranged to offset toward the front, so that the center of gravity may be positioned on the front side from the center of the towing direction. Therefore, during the process of coupling with a vehicle for towing or during a driving process after towing, a load may be applied to the front side in the towing direction, thereby facilitating coupling with the vehicle and ensuring stable coupling at a coupling portion during driving.

### Description of Drawings

FIG. 1 is a perspective view of a mobile-home-type trailer according to an embodiment of the present disclosure.
FIG. 2 is a view illustrating the internal configuration of the mobile-home-type trailer according to the embodiment of the present disclosure.
FIG. 3 is a cross-sectional view taken along line III-III of FIG. 2.
FIGS. 4 to 7 are views illustrating examples of operation of an air conditioner of the mobile-home-type trailer according to the embodiment of the present disclosure.
FIG. 8 illustrates views of examples of partitioning between a first residential space and a second residential space of a trailer body according to the embodiment of the present disclosure.
FIG. 9 illustrates views of different examples of partitioning between the first residential space and the second residential space of the trailer body according to the embodiment of the present disclosure.
FIGS. 10 and 11 are views illustrating different examples of a rear structure of the mobile-home-type trailer according to the embodiment of the present disclosure.

### Best Mode

According to the embodiment of the present disclosure, an air conditioner may be installed inside a machine room formed below a second residential space, such as a bathroom space, so as not to be exposed to the outside of a trailer body.

### Mode for Invention

The advantages and features of the present disclosure and the method of achieving them will become clear with reference to the embodiments described in detail below together with the attached drawings. However, the present disclosure is not limited to the embodiments disclosed below and may be implemented in various different forms, and these embodiments are provided only to ensure complete disclosure of the present disclosure and to fully inform those skilled in the art to which the present disclosure belongs of the scope of the present disclosure, and the present disclosure is only defined by the scope of the claims. Throughout the specification, identical reference numerals refer to identical components.

In addition, although a mobile-home-type trailer 10 is defined and described in this specification, it may also be defined as names such as a "camping trailer", a "caravan", etc., and the technical spirit of the present disclosure is not limited to these names.

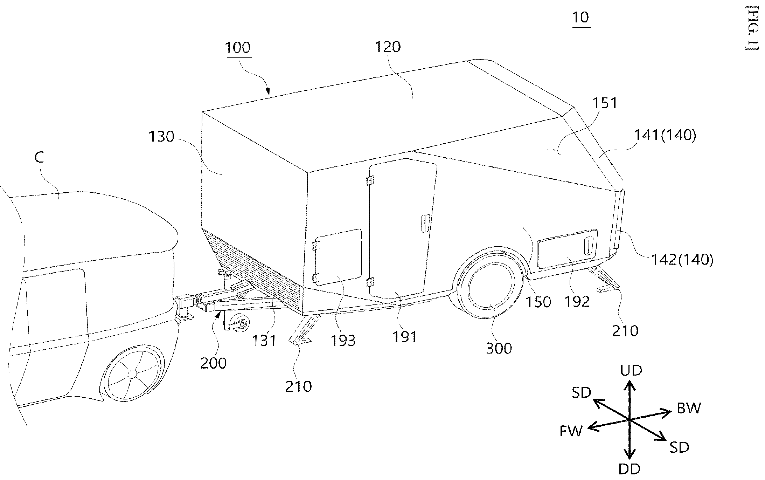

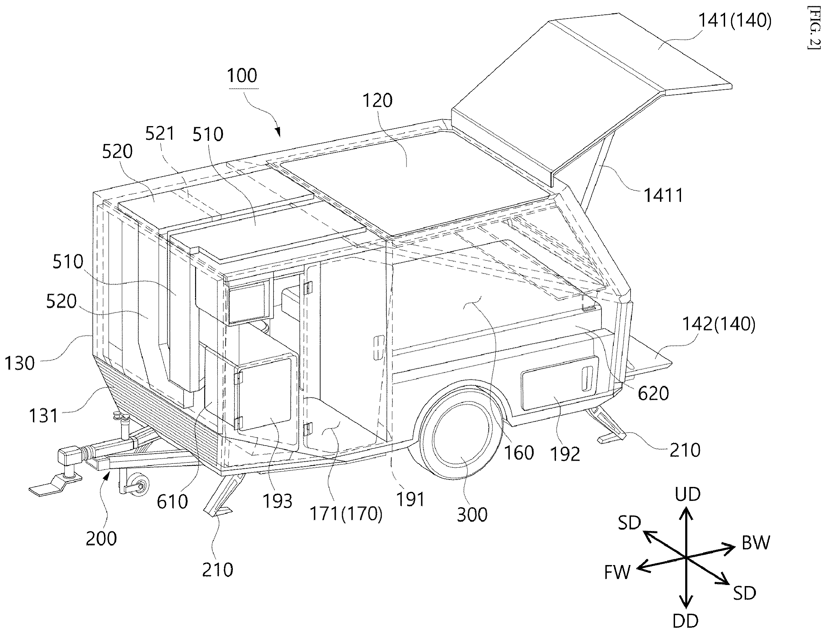

FIG. 1 is a perspective view of the mobile-home-type trailer 10 according to an embodiment of the present disclosure, and FIG. 2 is a view illustrating the internal configuration of the mobile-home-type trailer 10 according to the embodiment of the present disclosure.

Referring to FIGS. 1 and 2, the mobile-home-type trailer 10 according to the embodiment of the present disclosure may include a trailer body 100.

In an embodiment, the trailer body 100 may constitute the overall exterior of the mobile-home-type trailer 10. In addition, the trailer body 100 may include a first residential space 160 and a second residential space 170 therein.

In an embodiment, the first residential space 160 may include a bedroom space that may be used as a bedroom or a living room space that may be used as a living room. In the embodiment shown in FIG. 2, a bed 620 may be installed in the first residential space 160 as an example, but it is of course also possible to use the space for general floor-based living. In addition, the bed 620 may be provided in a foldable or detachable form, allowing the space to be used as the living room space during times other than sleeping hours.

In an embodiment, the second residential space 170 may include a kitchen space 171 and a bathroom space 172.

The mobile-home-type trailer 10 according to the embodiment of the present disclosure may be formed to be movable while being towed by a vehicle as illustrated in FIG. 1. To this end, the mobile-home-type trailer 10 according to the embodiment of the present disclosure may include travel wheels 300 and a towing module 200.

In an embodiment, the towing module 200 may be formed at a position protruding from the front (FW) of the trailer body 100, that is, the front (FW) in a towing direction (FW, BW), and may be coupled to a towing device of a vehicle.

In the present disclosure, a direction in which a vehicle travels while the mobile-home-type trailer is connected to the vehicle through the towing module 200 may be defined as the towing direction (FW, BW), the forward direction of the vehicle may be defined as the front side (FW) in the towing direction (FW, BW), and the rearward direction of the vehicle may be defined as the rear side (BW) in the towing direction (FW, BW). In addition, opposite sides perpendicular to the towing direction (FW, BW) may be defined as a side direction (SD).

According to the embodiment of the present disclosure, a pair of travel wheels 300 may be installed on the lower side of the trailer body 100 in the side direction (SD), and it is exemplified that two travel wheels 300 are provided. In the embodiment of the present disclosure, it is exemplified that the mobile-home-type trailer 10 is manufactured in a relatively small size, and in consideration of the small size, the pair of travel wheels 300 is applied.

According to the above configuration, the mobile-home-type trailer 10 according to the embodiment of the present disclosure may maintain a movable posture thereof by the pair of travel wheels 300 and the towing module 200 connected to the vehicle while being towed by the vehicle, as shown in FIG. 1. In addition, when detaching the towing module from the vehicle, the posture of the mobile-home-type trailer may be supported by a plurality of seating supports 210 protruding from the lower portion of the trailer body 100 and the travel wheels 300, as shown in FIG. 2.

In the embodiment of the present disclosure, the seating supports 210 may include pairs of seating supports installed respectively on both the front (FW) and rear (BW) sides in the towing direction (FW, BW) so as to be spaced apart from each other in the side direction (SD). Here, the seating supports 210 may be provided to be foldable or retractable into the lower portion of the trailer body 100, allowing the seating supports to be drawn into the lower portion of the trailer body 100, so that the seating supports 210 may not protrude downward during movement as shown in FIG. 1.

Meanwhile, the mobile-home-type trailer 10 according to the embodiment of the present disclosure may include a machine room 180. In addition, the mobile-home-type trailer 10 according to an embodiment of the present disclosure may include an air conditioner 400 installed inside the machine room 180 so as not to be exposed to the outside of the trailer body 100.

The machine room 180 according to the embodiment of the present disclosure may be provided below the second residential space 170 so as not to be exposed to the outside of the trailer body 100. Here, the machine room 180 may be formed to be partitioned from the second residential space 170 so as not to be exposed to the outside of the second residential space 170.

In the embodiment of the present disclosure, the second residential space 170 may be formed on the front side (FW) in the towing direction (FW, BW), and the first residential space 160 may be formed on the rear side (BW) in the towing direction (FW, BW). In addition, the machine room 180, in this example, may be formed below the second residential space 170 to be offset toward the front side (FW) in the towing direction (FW, BW).

According to the above configuration, the center of gravity of the trailer body 100 may be located on the front side (FW) in the towing direction (FW, BW) relative to the travel wheels 300 due to the weight of the air conditioner 400 installed in the machine room 180, as well as the weight of a toilet and a sink 630 disposed in the bathroom space 172 and the kitchen space 171, respectively. In addition, the second residential space 170, such as the bathroom space 172, may be arranged to be offset toward the front side (FW), so that the center of gravity may be located on the front side (FW) relative to the center thereof in the towing direction (FW, BW).

Through this, during the process of coupling with a vehicle for towing or during a driving process after towing, a load may be applied to the front side (FW) in the towing direction (FW, BW), thereby facilitating coupling with the vehicle and ensuring stable coupling at a coupling portion during driving.

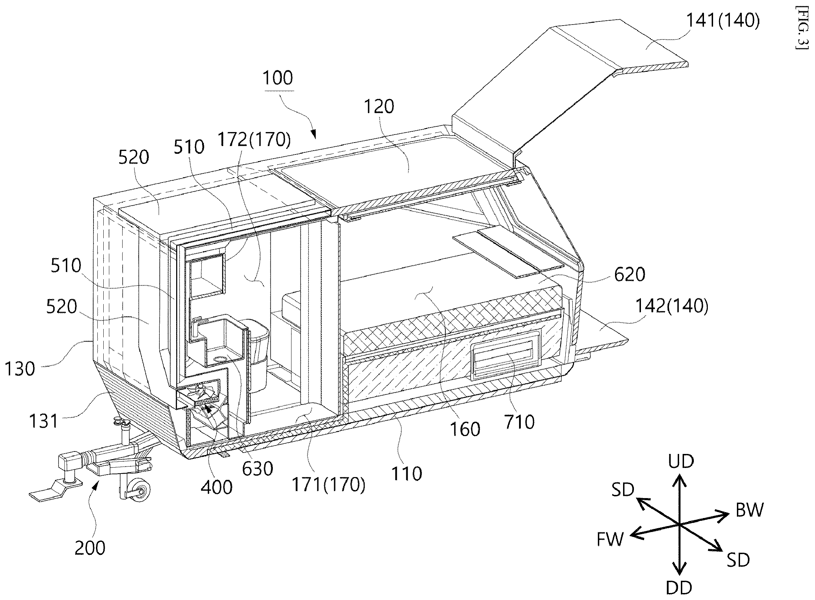

FIG. 3 is a cross-sectional view taken along line III-III of FIG. 2, and FIGS. 4 to 7 are views illustrating examples of operation of the air conditioner 400 of the mobile-home-type trailer 10 according to the embodiment of the present disclosure.

Referring to FIGS. 2 to 7, the air conditioner 400 according to the embodiment of the present disclosure may include an indoor heat exchanger 410 and an outdoor heat exchanger 420.

The indoor heat exchanger 410 may perform heat exchange with indoor air, such as indoor air within the first residential space 160 or the second residential space 170, to heat or cool the first residential space 160 or the second residential space 170. The outdoor heat exchanger 420 may perform heat exchange with outdoor air, that is, air outside the trailer body 100. Here, the air conditioner 400 may include a compressor and an expansion valve, and the indoor heat exchanger 410, the outdoor heat exchanger 420, the compressor, and the expansion valve may together form a refrigeration cycle to provide a heating or cooling function for the mobile-home-type trailer 10.

The machine room 180 according to the embodiment of the present disclosure may be divided into an indoor-air space 181 and an outdoor-air space 182. Here, the indoor heat exchanger 410 may be installed in the indoor-air space 181, and the outdoor heat exchanger 420 may be installed in the outdoor-air space 182.

According to the embodiment of the present disclosure, the mobile-home-type trailer 10 may include an indoor-air discharge duct 520 and an indoor-air intake duct 510. In addition, the indoor-air space 181 of the machine room 180 may be divided into an indoor-air discharge space 1812 and an indoor-air intake space 1811 relative to the indoor heat exchanger 410.

According to the embodiment of the present disclosure, the indoor-air discharge duct 520 may be installed in the trailer body 100 such that a first side of the indoor-air discharge duct 520 communicates with the first residential space 160 and a second side thereof communicates with the indoor-air discharge space 1812. Here, air that has exchanged heat with the indoor heat exchanger 410 may flow from the indoor-air discharge space 1812 through the indoor-air discharge duct 520 to the first residential space 160.

The indoor-air intake duct 510 may be installed in the trailer body 100 such that a fist side of the indoor-air intake duct 510 communicates with the first residential space 160, and a second side thereof communicates with the indoor-air intake space 1811. Here, air from the first residential space 160 may flow into the indoor-air intake space 1811 through the indoor-air intake duct 510.

In an embodiment, the air conditioner 400 may include an indoor-air blower fan 431. In the embodiment of the present disclosure, the indoor-air blower fan 431 may be exemplarily installed in the indoor-air discharge space 1812 to be adjacent to the indoor heat exchanger.

According to the above configuration, when the indoor-air blower fan 431 operates, air from the first residential space 160 may flow into the indoor-air intake space 1811 through the indoor-air intake duct 510, exchange heat with the indoor heat exchanger 410, and then flow back into the first residential space 160 via the indoor-air discharge space 1812 and the indoor-air discharge duct 520, thereby enabling heating or cooling.

In an embodiment, the trailer body 100 may include a floor structure 110, a ceiling structure 120, a pair of side structures 150, a front structure 130, and a rear structure 140. In addition, the trailer body 100 may include a partition-wall structure 111.

The floor structure 110 may form the floors of the first residential space 160 and the second residential space 170. In addition, the ceiling structure 120 may form the ceilings of the first residential space 160 and the second residential space 170. The pair of side structures 150 may form wall surfaces on opposite sides in the side direction (SD). The front structure 130 may form the front (FW) wall surface in the towing direction (FW, BW). In addition, the rear structure 140 may form the rear (BW) wall surface in the towing direction (FW, BW). In addition, the partition-wall structure 111 may connect the floor structure 110 with the ceiling structure 120 to partition the first residential space 160 from the second residential space 170.

Here, the floor structure 110, the ceiling structure 120, the side structures 150, the front structure 130, and the rear structure 140, which are structures that constitute wall structures in six directions of the trailer body 100, respectively, may be defined as including a frame structure inside, and inner and outer exterior structures. For example, the ceiling structure 120 may include a steel frame structure for forming a ceiling structure, an exterior structure for forming the exterior as shown in FIG. 1, and interior materials for forming the ceiling inside the trailer body 100.

In the embodiment of the present disclosure, the indoor-air intake duct 510 and the indoor-air discharge duct 520 may extend from the indoor-air space 181 of the machine room 180 through the front structure 130 along the ceiling structure 120 on the upper side of the second residential space 170 to communicate with the first residential space 160. Here, the indoor-air intake duct 510 and the indoor-air discharge duct 520 may communicate with the first residential space 160 while being embedded inside the front structure 130 and the ceiling structure 120, and thus may be prevented from being exposed to the second residential space 170 or the first residential space 160.

Meanwhile, the machine room 180 may include an outdoor-air inlet 1831 and an outdoor-air outlet 1832. The outdoor-air inlet 1831 and the outdoor-air outlet 1832 may communicate the exterior of the trailer body 100 with the outdoor-air space 182 of the machine room 180.

Here, according to the embodiment of the present disclosure, the air conditioner 400 may include an outdoor-air blower fan 432. The outdoor-air blower fan 432 may cause air to flow so that outside air of the trailer body 100 is drawn in through the outdoor-air inlet 1831, passes through the outdoor heat exchanger 420, and is discharged to the outside through the outdoor-air outlet 1832.

In the embodiment of the present disclosure, the outdoor-air inlet 1831 may be exemplified as being formed on the floor structure 110 of the trailer body 100. In addition, the outdoor-air outlet 1832 may be exemplified as being formed on the front structure 130 of the trailer body 100. Accordingly, external air introduced from the lower side of the trailer body 100 may pass through the outdoor heat exchanger and be discharged toward the front (FW) of the trailer body 100.

Meanwhile, the air conditioner 400 according to the embodiment of the present disclosure may include a heat exchange unit 440. The heat exchange unit 440 may include independent air flow paths formed in a first direction and a second direction intersecting the first direction, respectively.

In an embodiment, the heat exchange unit 440 may include an indoor-air discharge part 442, an indoor-air introduction part 441, an outdoor-air introduction part 443, and an outdoor-air discharge part 444. Each of the indoor-air introduction part 441 and the indoor-air discharge part 442 may be formed in the first direction to form the air flow path in the first direction, and the outdoor-air introduction part 443 and the outdoor-air discharge part 444 may form the air flow path in the second direction.

Here, the heat exchange unit 440 may be installed inside the machine room 180 such that the indoor-air discharge part 442 faces the outdoor-air space 182, the indoor-air introduction part 441 faces the indoor-air space 181, the outdoor-air introduction part 443 faces the outdoor-air space 182, and the outdoor-air discharge part 444 faces the indoor-air space 181.

On the basis of the above configuration, the air conditioner 400 may operate in one of a normal operation mode and a ventilation operation mode.

In the normal operation mode, the air conditioner 400 according to the embodiment of the present disclosure may operate with an airflow through the heat exchange unit 440 blocked, and in the ventilation operation mode, air may flow through the heat exchange unit 440.

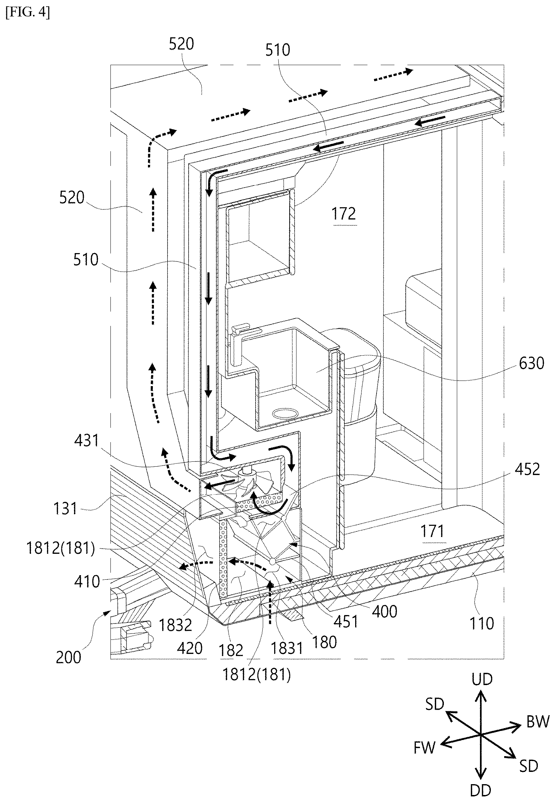

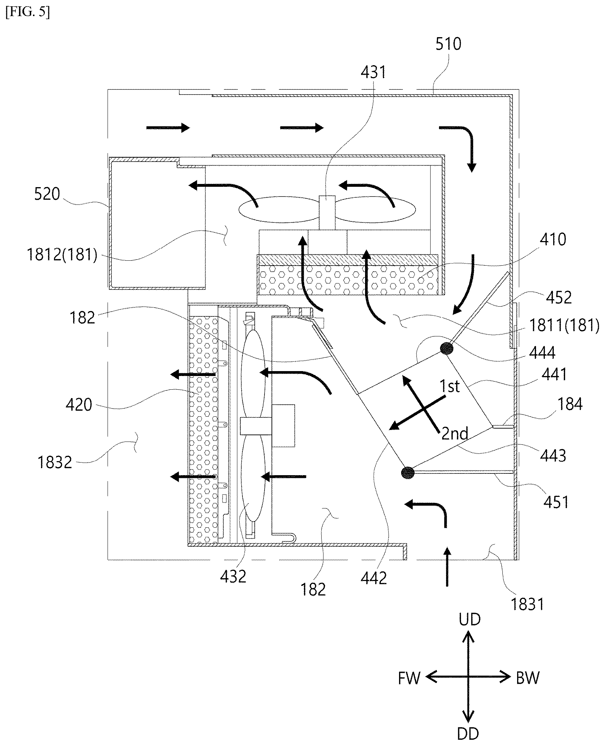

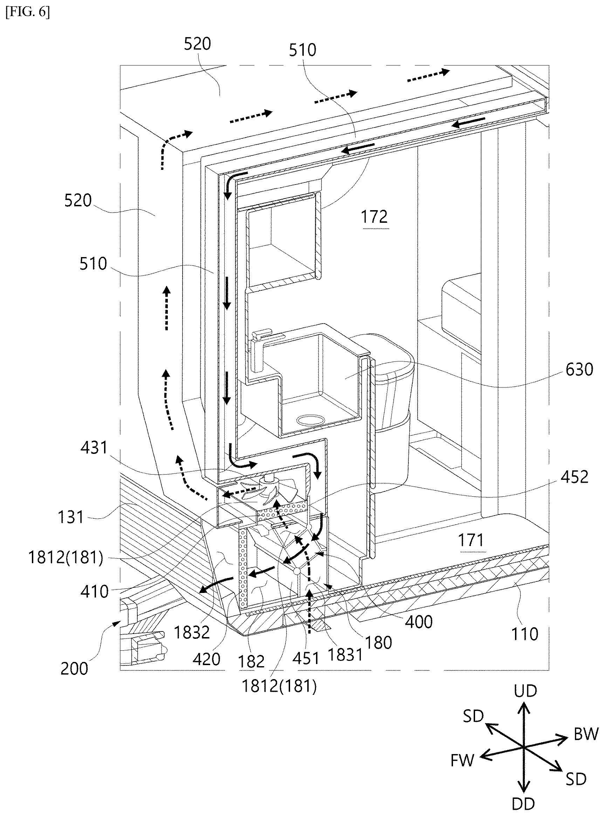

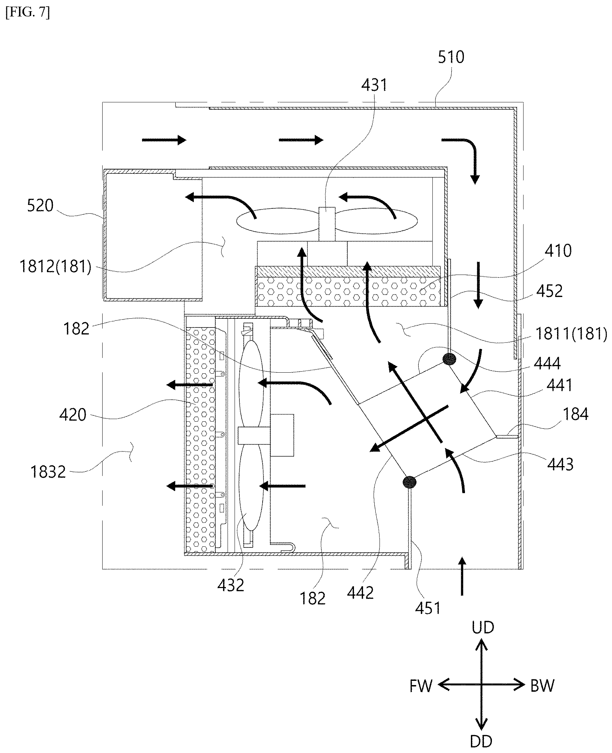

FIGS. 4 and 5 are views illustrating the normal operation mode of the air conditioner 400, and FIGS. 6 and 7 are views illustrating the ventilation operation mode of the air conditioner 400.

In an embodiment, the air conditioner 400 may include a first damper 451 and a second damper 452.

According to the embodiment of the present disclosure, the first damper 451 may selectively communicate the outdoor-air inlet 1831 with one of the outdoor-air space 182 and the outdoor-air introduction part 443 of the heat exchange unit 440. In addition, the second damper 452 may communicate the indoor-air intake duct 510 with one of the indoor-air intake space 1811 and the indoor-air introduction part 441 of the heat exchange unit 440.

Here, as illustrated in FIGS. 4 and 5, in the normal operation mode of the air conditioner 400, the first damper 451 may be switched to communicate the outdoor-air inlet 1831 with the outdoor-air space 182, and the second damper 452 may be switched to communicate the indoor-air intake duct 510 with the indoor-air intake space 1811.

According to this configuration, the air flow paths in the first direction and the second direction of the heat exchange unit 440 may be blocked, and external air introduced through the outdoor-air inlet 1831 may pass through the outdoor heat exchanger and may be discharged to the outside through the outdoor-air outlet 1832. In addition, air introduced from the first residential space 160 through the indoor-air intake duct 510 may flow through the indoor-air intake space 1811, the indoor heat exchanger 410, the indoor-air discharge space, and the indoor-air discharge duct.

On the other hand, as illustrated in FIGS. 6 and 7, in the ventilation operation mode of the air conditioner 400, the first damper 451 may be switched to communicate the outdoor-air inlet with the outdoor-air introduction part 443 of the heat exchange unit 440, and the second damper 452 may be switched to communicate the indoor-air intake duct 510 with the indoor-air introduction part 441 of the heat exchange unit 440.

According to this configuration, external air introduced through the outdoor-air inlet 1831 may flow in the first direction through the outdoor-air introduction part 443 and the outdoor-air discharge part 444 of the heat exchange unit 440 into the indoor-air intake space 1811, pass through the indoor heat exchanger 410, and then flow through the indoor-air discharge duct 520 into the first residential space 160.

In addition, air introduced from the first residential space 160 through the indoor-air intake duct 510 may flow in the second direction through the indoor-air introduction part 441 and the indoor-air discharge part 442 of the heat exchange unit 440 into the outdoor-air space 182, pass through the outdoor heat exchanger 420, and be discharged through the outdoor-air outlet 1832 to the outside.

Accordingly, in the normal operation mode, cooling or heating may be performed without exchanging air with the outside, that is, without ventilating indoor air, and in the ventilation operation mode, heating or cooling may performed while ventilation is achieved through the exchange of indoor and outdoor air. Here, when only the indoor-air blower fan 431 and the outdoor-air blower fan 432 are operated without running the refrigeration cycle in the ventilation operation mode, ventilation alone may be performed.

In an embodiment, the machine room 180 may include a partition wall 184. Here, the partition wall 184 may divide the outdoor-air space 182 from the indoor-air space 181. In addition, the heat exchange unit 440 may be supported by the partition wall 184 such that the indoor-air discharge part 442 and the outdoor-air introduction part 443 face the outdoor-air space 182, and the indoor-air introduction part 441 and the outdoor-air discharge part 444 face the indoor-air space 181.

That is, the outdoor-air space 182 and the indoor-air space 181 of the machine room 180 may be partitioned from each other by the partition wall 184 and the heat exchange unit 440, and through the switching operations of the first damper 451 and the second damper 452, the flow paths of the heat exchange unit 440 in the first direction and the second direction may selectively communicate the indoor-air space 181 with the outdoor-air space 182.

In the above-described embodiment, the indoor-air discharge duct 520 is described as being configured to communicate with the first residential space 160. In another embodiment, the indoor-air discharge duct 520 may include a branched discharge duct 521 that branches from the ceiling structure 120 on the upper side of the second residential space 170 to communicate with the second residential space 170.

Through this configuration, not only the first residential space 160 but also the second residential space 170 may be heated or cooled.

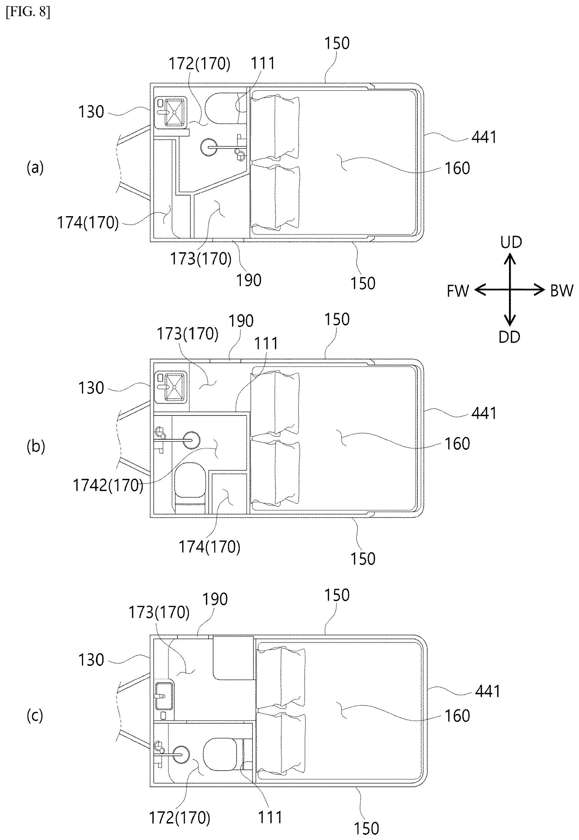

Meanwhile, FIG. 8 illustrates views of examples of partitioning between the first residential space 160 and the second residential space 170 of the trailer body 100 according to the embodiment of the present disclosure. In the above-described embodiment, the second residential space 170 is exemplified as being divided into the kitchen space 171 and the bathroom space 172.

In the embodiment shown in FIG. 8(a), the first residential space 160 is formed on the rear (BW) side in the towing direction (FW, BW), and the second residential space 170 is formed on the front (FW) side in the towing direction (FW, BW). Here, in the embodiment shown in FIG. 8(a), the second residential space 170 is exemplified as being divided into an entry space 173 and a bathroom space 172.

Here, in the embodiment of the present disclosure, an entrance 190 for access from the outside may be formed on one side of the pair of side structures 150. Here, the entrance 190 may be provided to be opened and closed by an entrance door 191 (see FIG. 1).

In an embodiment, the entrance 190 may be connected to the second residential space 170, and in the embodiment shown in FIG. 8(a), the entrance may be connected to the entry space 173 of the second residential space 170.

In an embodiment, an appliance space 174, in which a home appliance 610 is disposed, may be formed on the wall surface of the front side (FW) in the towing direction (FW, BW) within the entry space 173. Here, the machine room 180 may be formed below the home appliance 610 or below the bathroom space 172.

Even in the embodiment shown in FIG. 8(b), the first residential space 160 may be formed on the rear side (BW) in the towing direction (FW, BW), and the second residential space 170 may be formed on the front side (FW) in the towing direction.

In the embodiment shown in FIG. 8(b), the second residential space 170 may be exemplified as being divided into the entry space 173 and the bathroom space 172, and the position thereof in the side direction (SD) may be exemplified as being opposite to the position shown in FIG. 8(a).

In addition, the entrance 190 may also be exemplified as being connected to the entry space 173. Here, the appliance space 174 may be exemplified as being formed in the bathroom space 172.

In the embodiment shown in FIG. 8(c), the second residential space 170 may be exemplarily divided into the entry space 173 and the bathroom space 172, and the position thereof in the side direction (SD) may be exemplarily opposite to the position shown in FIG. 8(a). In addition, the entrance 190 may also be exemplarily connected to the entry space 173. Here, the appliance space 174 may be exemplarily formed within the entry space 173.

As described above, the second residential space 170 may be implemented in various ways depending on design thereof, and by forming the machine room 180 below a washbasin or the toilet, air conditioning equipment and the like may be installed without being exposed to the outside or inside of the relatively small-sized trailer body 100.

Meanwhile, according to the embodiment of the present disclosure, the rear structure 140 may include a rear opening door 141.

Referring to FIG. 2, the rear opening door 141 may be rotatably coupled in an up-down direction (UD, DD) to the rear end of the ceiling structure 120, allowing opening and closing of the rear (BW) of the trailer body 100. That is, the rear opening door 141 may be rotatably coupled to the trailer body 100 about the side direction (SD) as an axis, rotating upward to open the rear (BW) of the trailer body 100, and rotating downward to close the rear (BW) of the trailer body 100.

Here, in the embodiment of the present disclosure, the first residential space 160 may be formed on the rear side (BW) of the trailer body 100 in the towing direction (FW, BW), and thus opening the rear opening door 141 may have the effect of opening the rear side (BW) of the first residential space 160.

In addition, the rear opening door 141 may include a rear-view window made of a transparent material, so that even when the rear opening door 141 closes the rear (BW) of the trailer body 100, the rear-view window may provide a sense of openness to a user located within the first residential space 160.

Here, the rear opening door 141 may be supported by a support stay so that the open state thereof can be maintained. In an embodiment, the support stay may be of a cylindrical type, so that the rear opening door 141 may be opened smoothly and maintained in the open state.

In an embodiment, the rear structure 140 may include a rear sub-door 142. The rear sub-door 142 may be coupled rotatably in the up-down direction (UD, DD) to the lower end of the floor structure 110. In an embodiment, the rear sub-door 142 may be rotatably coupled to the trailer body 100 about the side direction (SD) as an axis on the rear (BW) side end of the floor structure 110.

According to the above configuration, when the rear opening door 141 is opened, the upper part of the rear structure 140 may be opened, and when the rear sub-door 142 is opened together with the rear opening door 141, the opening range may be relatively increased.

Here, the rear sub-door 142 may be configured to open only up to a horizontal position, for example, 90°, so that while the rear opening door 141 is opened, a user may open the rear sub-door 142 to 90°, allowing the user to sit on the rear sub-door or place necessary items thereon.

In an embodiment, the rear opening door 141 may be obliquely formed in a rearward and downward direction from the rear end (BW) of the ceiling structure 120 while the trailer body 100 is closed. In addition, the rear sub-door 142 may be configured to have a bent shape downward from the rear opening door 141.

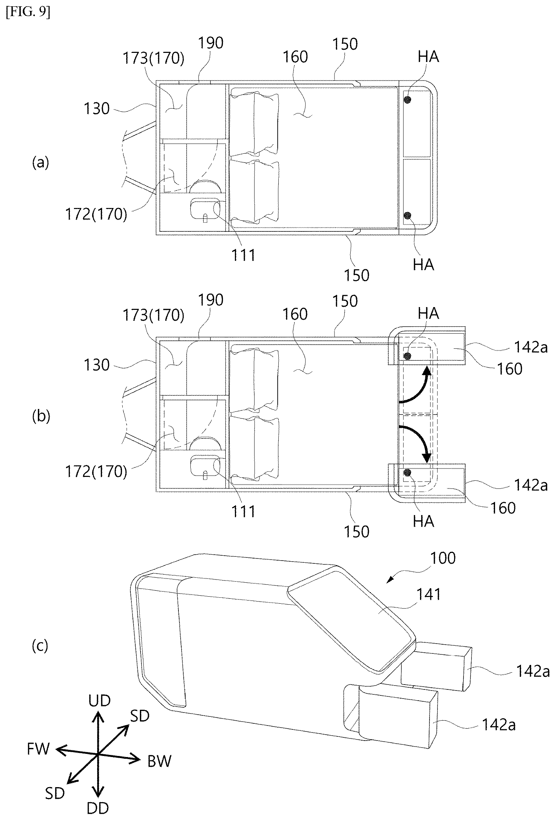

FIG. 9 illustrates views of different examples of partitioning between the first residential space 160 and the second residential space 170 of the trailer body 100 according to the embodiment of the present disclosure.

In the embodiment shown in FIG. 9, the first residential space 160 may be formed on the rear side (BW) in the towing direction (FW, BW), and the second residential space 170 may be formed on the front side (FW) in the towing direction (FW, BW). Here, in the embodiment shown in FIG. 9, the second residential space 170 may be exemplarily divided into the entry space 173 and the bathroom space 172. In addition, the entrance 190 may be exemplarily connected to the entry space 173.

In the embodiment shown in FIG. 9, a pair of rear sub-doors 142a may be exemplarily configured to rotate about the up-down direction (UD, DD) as an axis to open the lower portion of rear side (BW) of the trailer body 100. In one embodiment, one rear sub-door 142 may be coupled to rotate about a hinge shaft (HA) formed in an up-down direction (UD, DD) on a first edge in the side direction (SD) on the lower rear (BW) side of the trailer body (100), and the other rear sub-door 142a may be coupled to rotate about a hinge shaft (HA) formed in the up-down direction (UD, DD) on a second edge in the side direction (SD).

Here, the home appliance 610, for example, a refrigerator, may be installed in each of the rear sub-doors 142a. Alternatively, a storage space for storing items may be formed in the rear sub-door 142a. Accordingly, when a user eats or cooks outdoors, the user may use the home appliance 610 or the items stored in the storage space while keeping the rear sub-doors 142a are open.

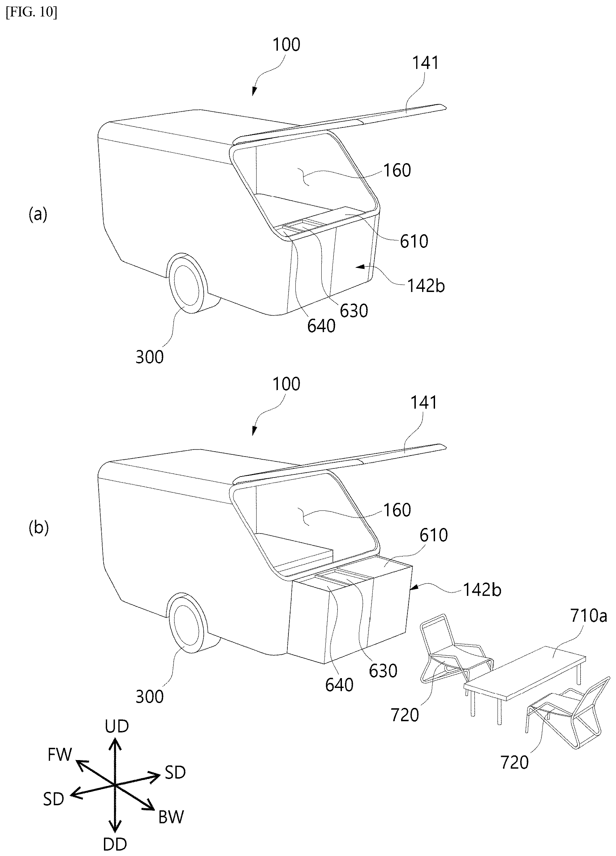

FIG. 10 is a view illustrating a different example of the rear structure 140 of the mobile-home-type trailer 10 according to the embodiment of the present disclosure.

In the embodiment illustrated in FIG. 10, the rear structure 140 may include the rear opening door 141 as described above. The rear opening door 141 may constitute the upper portion of the rear structure 140 and may be formed to be inclined as in the embodiment described above.

In addition, the rear structure 140 may include a sliding module 142b that slides out rearward from the trailer body 100 and slides into the trailer body 100. The sliding module 142b may be disposed below the rear opening door 141 and constitute the lower portion of the rear structure 140.

In an embodiment, the sliding module 142b may include at least one of the home appliance 610 such as a refrigerator, a cooking appliance 640 such as an induction or highlight cooker, and the sink 630 for dishwashing or the like.

With the above configuration, when a user eats or cooks outdoors, a user may pull out the sliding module 142b from the trailer body 100, take out food from inside the cooking appliance or the refrigerator, and as shown in FIG. 10(b), use a table 710a and chairs 720 installed separately outdoors to eat or cook.

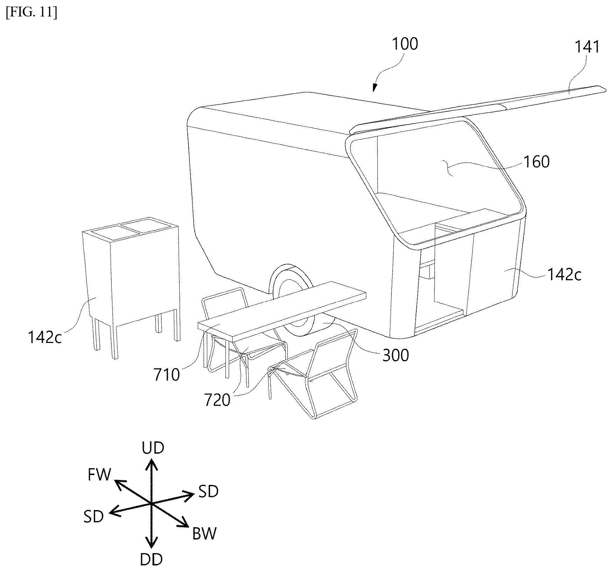

FIG. 11 is a view illustrating a different example of the rear structure 140 of the mobile-home-type trailer 10 according to the embodiment of the present disclosure.

In the embodiment illustrated in FIG. 11, the rear structure 140 may include the rear opening door 141 as described above. The rear opening door 141 may constitute the upper portion of the rear structure 140 and may be formed to be inclined as in the previously described embodiment.

In addition, the rear structure 140 may be configured to include a detachable module 142c that is detachable from and attachable to the trailer body 100. Here, the detachable module 142c may be disposed below the rear opening door 141 and may constitute the lower portion of the rear structure 140.

The detachable module may be maintained to be mounted to the trailer body 100 when not in use, and when the detachable module is used, as shown in FIG. 11, the detachable module may be detached from the trailer body 100, moved to a designated location, and then used.

In an embodiment, the detachable module may include a cooking module such as an induction or highlight cooker. Accordingly, as shown in FIG. 11, a user may move the cooking module to a location at which a table 710 and chairs 720 are arranged, thereby enhancing convenience of use.

Here, as illustrated in FIG. 11, the table 710 may be a retractable table 710 that is drawn into and out from the trailer body 100. Referring to FIGS. 1 and 2, a table door 192 may be provided on the outside of the side structure 150 of the trailer body 100 to allow access to the table from the outside.

In addition, after opening the table door 192, the user may slide out the retractable table 710, which is stored inside, and set up the table in the side direction (SD) of the trailer body 100, as illustrated in FIG. 11.

Here, in the embodiment of the present disclosure, the entrance 190 for access from the outside is exemplarily formed on one side of the pair of side structures 150. Here, the entrance 190 may be provided to be opened and closed by an entrance door 191 (see FIG. 1).

In an embodiment, the entrance 190 may be exemplarily connected to the second residential space 170, and in the embodiment shown in FIG. 8(a), may be exemplarily connected to the entry space 173 of the second residential space 170.

In an embodiment, in the entry space 173, the appliance space 174 in which the home appliance 610 is disposed may be formed on the wall surface of the front side (FW) in the towing direction (FW, BW). Here, the machine room 180 may be formed below the home appliance 610 or below the bathroom space 172.

Here, a home appliance door 193 may be provided on the outer side of the side structure 150 in which a sliding table 710 is formed. In addition, when the home appliance door 193 is opened, a refrigerator may be disposed inside as illustrated in FIG. 2.

Through this, a user may install the table on the side surface of the trailer body 100 or pull out the sliding table 710, and then easily access the refrigerator embedded in the side structure 150 with a short movement path, without needing to enter the interior of the trailer body 100.

Although the embodiments of the present disclosure have been described with reference to the attached drawings, the present disclosure is not limited to the embodiments, but may be manufactured in various different forms, and those skilled in the art to which the present disclosure belongs will understand that the present disclosure may be implemented in other specific forms without changing the technical idea or essential features of the present disclosure. Therefore, it should be understood that the embodiments described above are exemplary in all respects and not limiting.

### <Description of the Reference Numerals in the Drawings>

10: Mobile-home-type trailer 100: Trailer body
110: Floor structure 111: Partition-wall structure
120: Ceiling structure 130: Front structure
140: Rear structure 141: Rear opening door
142, 142a: Rear sub-door 142b: Sliding module
142c: Detachable module 150: Side structure
160: First residential space 170: Second residential space
171: Kitchen space 172: Bathroom space
173: Entry space 174: Appliance space
180: Machine room 181: Indoor-air space
1811: Indoor-air intake space 1812: Indoor-air discharge space
182: Outdoor-air space 1831: Outdoor-air inlet
1832: Outdoor-air outlet 184: Partition wall
190: Entrance 191: Entrance door
192: Table door 193: Home appliance door
200: Towing module 300: Travel wheel
400: Air conditioner 410: Indoor heat exchanger
420: Outdoor heat exchanger 431: Indoor-air blower fan
432: Outdoor-air blower fan 440: Heat exchange unit
441: Indoor-air introduction part 442: Indoor-air discharge part
443: Outdoor-air introduction part 444: Outdoor-air discharge part
451: First damper 452: Second damper
510: Indoor-air intake duct 520: Indoor-air discharge duct
521: Branched discharge duct 610: Home appliance
620: Bed 630: Sink
640: Cooking appliance 710: Sliding table
720: Chair

### Industrial Applicability

The present disclosure may be applied to the field of mobile-home-type trailers.

## Claims

1. A mobile-home-type trailer comprising:
a trailer body having interior thereof partitioned into a first residential space and a second residential space;
a machine room located below the second residential space and partitioned from the second residential space so as not to be exposed to the outside of the trailer body; and
an air conditioner installed inside the machine room so as not to be exposed to the outside of the trailer body.

2. The mobile-home-type trailer of claim 1, wherein the second residential space is formed on a front side in a towing direction;
the first residential space is formed on a rear side in the towing direction; and
the machine room is formed below the second residential space to be offset toward the front side in the towing direction.

3. The mobile-home-type trailer of claim 1, wherein the air conditioner comprises an indoor heat exchanger and an outdoor heat exchanger; and
the machine room is partitioned into an indoor-air space in which the indoor heat exchanger is installed, and an outdoor-air space in which the outdoor heat exchanger is installed.

4. The mobile-home-type trailer of claim 3, wherein the indoor-air space is partitioned into an indoor-air discharge space and an indoor-air intake space with respect to the indoor heat exchanger,
the mobile-home-type trailer further comprises:
an indoor-air discharge duct installed in the trailer body such that a first side of the indoor-air discharge duct communicates with the first residential space and a second side thereof communicates with the indoor-air discharge space, and configured to allow air that has exchanged heat with the indoor heat exchanger to flow from the indoor-air discharge space to the first residential space, and
an indoor-air intake duct installed in the trailer body such that a first side of the indoor-air intake duct communicates with the first residential space and a second side thereof communicates with the indoor-air intake space, and configured to allow air from the first residential space to flow into the indoor-air intake space.

5. The mobile-home-type trailer of claim 4, wherein the machine room has an outdoor-air inlet and an outdoor-air outlet formed to communicate the outdoor-air space with the outside of the trailer body, and
the air conditioner further comprises an outdoor-air blower fan that allows air to flow such that external air is drawn in through the outdoor-air inlet, passes through the outdoor heat exchanger, and is discharged to the outside through the outdoor-air outlet.

6. The mobile-home-type trailer of claim 5, wherein the air conditioner further comprises a heat exchange unit in which independent air flow paths are formed in a first direction and in a second direction intersecting the first direction, respectively,
wherein the heat exchange unit comprises:
an indoor-air discharge part provided in the first direction to face the outdoor-air space;
an indoor-air introduction part provided in the first direction to face the indoor-air space,
an outdoor-air introduction part provided in the second direction to face the outdoor-air space; and
an outdoor-air discharge part provided in the second direction to face the indoor-air space, and
wherein the air conditioner is operable in a normal operation mode in which an air flow through the heat exchange unit is blocked, and in a ventilation operation mode in which air flows through the heat exchange unit.

7. The mobile-home-type trailer of claim 6, wherein the air conditioner further comprises:
a first damper configured to selectively communicate the outdoor-air inlet with one of the outdoor-air space and the outdoor-air introduction part of the heat exchange unit, and
a second damper configured to selectively communicate the indoor-air intake duct with one of the indoor-air intake space and the indoor-air introduction part of the heat exchange unit.

8. The mobile-home-type trailer of claim 7, wherein in the normal operation mode, the first damper communicates the outdoor-air inlet with the outdoor-air space, and the second damper communicates the indoor-air intake duct with the indoor-air intake space; and
in the ventilation operation mode, the first damper communicates the outdoor-air inlet with the outdoor-air introduction part of the heat exchange unit, and the second damper communicates the indoor-air intake duct with the indoor-air introduction part of the heat exchange unit.

9. The mobile-home-type trailer of claim 8, wherein in the ventilation operation mode, air introduced from the outside through the outdoor-air inlet flows through the outdoor-air introduction part and the outdoor-air discharge part of the heat exchange unit into the indoor-air intake space, and flows through the indoor heat exchanger to the indoor-air discharge duct, and
air drawn in from the first residential space through the indoor-air intake duct flows through the indoor-air introduction part and the indoor-air discharge part of the heat exchange unit into the outdoor-air space, and is discharged to the outside through the outdoor-air outlet.

10. The mobile-home-type trailer of claim 8, wherein the machine room has the outdoor-air space and the indoor-air space partitioned from each other, and comprises a partition wall that supports the heat exchange unit such that the indoor-air discharge part and the outdoor-air introduction part of the heat exchange unit face the outdoor-air space, and the indoor-air introduction part and the outdoor-air discharge part thereof face the indoor-air space.

11. The mobile-home-type trailer of claim 4, wherein the trailer body comprises:
a floor structure forming floors of the first residential space and the second residential space;
a ceiling structure forming ceilings of the first residential space and the second residential space;
a pair of side structures forming wall surfaces on opposite sides in a side direction intersecting a towing direction;
a front structure forming a front wall surface in the towing direction; and
a partition-wall structure that connects the floor structure with the ceiling structure so as to partition the first residential space and the second residential space from each other,
wherein the indoor-air intake duct and the indoor-air discharge duct extend from the indoor-air space of the machine room through the front structure along the ceiling structure on an upper side of the second residential space and communicate with the first residential space, and are embedded within the front structure and the ceiling structure.

12. The mobile-home-type trailer of claim 11, wherein the indoor-air discharge duct comprises a branched discharge duct that branches from the ceiling structure on the upper side of the second residential space to communicate with the second residential space.

13. The mobile-home-type trailer of claim 11, wherein an entrance for access from the outside is formed on one side of the pair of side structures and is connected to the second residential space.

14. The mobile-home-type trailer of claim 5, wherein the outdoor-air inlet is formed to face toward a lower side of the trailer body, and
the outdoor-air outlet is formed to face forward in the towing direction of the trailer body.

15. The mobile-home-type trailer of claim 1, wherein the first residential space comprises at least one of a bedroom space and a living room space, and
the second residential space comprises at least one of a bathroom space, a kitchen space, and an entry space in which an entrance is formed.
